# EUROPÄISCHE PATENTSCHRIFT

(11) **EP 1 340 574 B1**
(45) Veröffentlichungstag und Bekanntmachung des Hinweises auf die Patenterteilung: **13.05.2009**
(21) Anmeldenummer: 03003910.1
(22) Anmeldetag: 21.02.2003
(51) Int. Cl.: B23C 3/12

(54) **Handfräsmaschine**
Hand milling machine
Machine à fraiser à main

(30) Priorität: 02.03.2002 DE 20203390 U
(43) Veröffentlichungstag der Anmeldung: 03.09.2003
(73) Patentinhaber: Trumpf Grüsch AG, 7214 Grüsch (CH)
(72) Erfinder: Böhringer, Claus, 7206 Igis (CH)
(74) Vertreter: Kohler Schmid Möbus

(56) Entgegenhaltungen:
- DE-U- 9 306 249
- US-A- 1 524 894
- US-A- 4 946 323
- US-A- 4 964 765
- US-A- 5 018 914

## Beschreibung

Die Erfindung betrifft eine Handfräsmaschine zum Bearbeiten von Werkstücken, insbesondere von Werkstückkanten, mit wenigstens einem umlaufend antreibbaren Fräswerkzeug, mit einer Maschinenauflage, gegenüber welcher das Fräswerkzeug werkstückseitig vorsteht und über welche die Handfräsmaschine an dem zu bearbeitenden Werkstück abstützbar ist sowie mit einem Gewinde-Stellantrieb, der einen dem Fräswerkzeug sowie einen der Maschinenauflage zugeordneten und jeweils mit wenigstens einem Stellantriebselement versehenen Stellantriebsteil aufweist und mittels dessen das Fräswerkzeug und die Maschinenauflage unter Relativ-Drehbewegung der beiderseitigen Stellantriebsteile um eine Stellantriebsachse in Richtung des Überstandes des Fräswerkzeuges gegenüber der Maschinenauflage relativ zueinander einstellbar sind, wobei die beiderseitigen Stellantriebsteile einander in radialer Richtung der Stellantriebsachse gegenüberliegen und der radial innen liegenden (innere) Stellantriebsteil mittels einer lösbaren und in radialer Richtung der Stellantriebsachse wirksamen Spannvorrichtung mit dem radial außen liegenden (äußeren) Stellantriebsteil in Verbindung bringbar ist und dadurch die beiderseitigen Stellantriebsteile gegen Relativ-Drehbewegung um die Stellantriebsachse sicherbar sind.

Der genannte Gewinde-Stellantrieb dient zur Definition der Eintauchtiefe des Fräswerkzeuges an dem zu bearbeitenden Werkstück. Im Falle von Kantenfräsen, die zum Anfasen von Werkstückkanten dienen und zu diesem Zweck Schneidwerkzeuge mit gegen die Werkzeug-Antriebsachse geneigten Schneiden aufweisen, variiert mit der Eintauchtiefe der Fräswerkzeuge die Größe der an der betreffenden Werkstückkante erstellten Fase.

Eine gattungsgemäße Handfräsmaschine ist bekannt aus US-A-1,514,894. Im Falle des Standes der Technik ist ein Fräswerkzeug an einem Motorgehäuse gelagert, das einen Teil eines Gewinde-Stellantriebes ausbildet und zu diesem Zweck mit einem Außengewinde versehen ist. Mit dem Außengewinde an dem Motorgehäuse kämmt ein Innengewinde an einer hohlzylindrischen Maschinenauflage. Durch Relativ-Drehbewegung von Motorgehäuse und Maschinenauflage lässt sich der werkstückseitige Überstand des Fräswerkzeuges gegenüber der Maschinenauflage und damit die Eintauchtiefe des Fräswerkzeuges an dem zu bearbeitenden Werkstück veränderlich einstellen. Zur Sicherung einer vorgenommenen Einstellung ist die Wand der hohlzylindrischen Maschinenauflage in Richtung der Hohlzylinderachse geschlitzt und beidseits des Schlitzes mit jeweils einem radial vorragenden Flansch versehen. Diese beiden Flansche werden von einer Klemmschraube durchsetzt. Durch Drehen der Klemmschraube in Anzugsrichtung lassen sich die Flansche und mit diesen die Ränder des Schlitzes an der Maschinenauflage so weit gegeneinander ziehen, dass sich zwischen dem Innengewinde der Maschinenauflage und dem Außengewinde des Motorgehäuses ein Reibschluss ergibt, der einer unbeabsichtigten Relativ-Drehbewegung von Maschinenauflage und Motorgehäuse entgegenwirkt. Zum Lösen der reibschlüssigen Verbindung zwischen Motorgehäuse und Maschinenauflage ist die Klemmschraube entgegen der Anzugsrichtung zu drehen. Damit verbunden ist eine Aufweitung der hohlzylindrischen Maschinenauflage. Wird die Klemmschraube zu weit entgegen der Anzugsrichtung gedreht und folglich die Maschinenauflage zu stark aufgeweitet, so können das Innengewinde an der Maschinenauflage und das Außengewinde an dem Motorgehäuse unbeabsichtigterweise außer Eingriff kommen.

Eine Handfräsmaschine zu schaffen, die gegenüber dem Stand der Technik bezüglich ihrer Funktionssicherheit verbessert ist, hat sich die vorliegende Erfindung zum Ziel gesetzt.

Erfindungsgemäß gelöst wird diese Aufgabe durch die Merkmalskombination von Anspruch 1. Im Falle der Erfindung sind demnach die Stellantriebsteile des Gewinde-Stellantriebes einerseits und die Spannvorrichtung andererseits konstruktiv voneinander getrennt. Folglich können die Stellantriebsteile und die Spannvorrichtung betätigt bzw. gehandhabt werden, ohne dass sich dies in jedem Fall zwangsläufig auf die jeweils andere Einrichtung der Handfräsmaschine auswirken würde.

Besondere Ausführungsarten der Erfindung nach Anspruch 1 ergeben sich aus den abhängigen Ansprüchen 2 bis 7.

Durch eine konstruktiv besonders einfache Gestaltung der Spannvorrichtung zeichnen sich die in den Ansprüchen 2 und 3 beschriebenen Varianten der erfindungsgemäßen Handfräsmaschine aus.

Gemäß Anspruch 4 ist im Interesse der Funktionssicherheit der Spannvorrichtung für eine definierte Anordnung des Spannelementes an dem äußeren Stellantriebsteil gesorgt.

Im Falle der bevorzugten Erfindungsbauart nach Anspruch 5 besteht eine gegenseitige räumliche Zuordnung von Maschinengrundkörper und Spannelement bzw. Betätigungseinrichtung der Spannvorrichtung, die unabhängig ist von der Drehstellung des der Maschinenauflage zugeordneten Stellantriebsteils gegenüber dem dem Fräswerkzeug zugeordneten Stellantriebsteil. Folglich kann die Spannvorrichtung bei jeder beliebigen gegenseitigen Einstellung von Fräswerkzeug und Maschinenauflage eine Position einnehmen, in der ihre Funktionssicherheit und/oder eine bedienerfreundliche Betätigung gewährleistet ist.

Mit geringem konstruktivem Aufwand zu realisierende Verdrehsicherungen für das Spannelement bzw. die Betätigungseinrichtung der Spannvorrichtung erfindurigsgemäßer Handfräsmaschinen sind den Ansprüchen 6 und 7 zu entnehmen.

Nachfolgend wird die Erfindung anhand beispielhafter schematischer Darstellungen näher erläutert. Es zeigen:
- Figur 1: eine Handfräsmaschine, mit Fräswerkzeug und Maschinenauflage in teilgeschnittener Darstellung,
- Figur 2: den werkstückseitigen Teil der Handfräsmaschine nach Figur 1 in perspektivischer Darstellung,
- Figur 3: den Maschinenteil nach Figur 2 in Explosionsdarstellung,
- Figur 4: die Handfräsmaschine nach den Figuren 1 bis 3 in der Seitenansicht bei der Werkstückbearbeitung und
- Figur 5: die Handfräsmaschine nach Figur 4 in der Draufsicht auf das bearbeitete Werkstück.

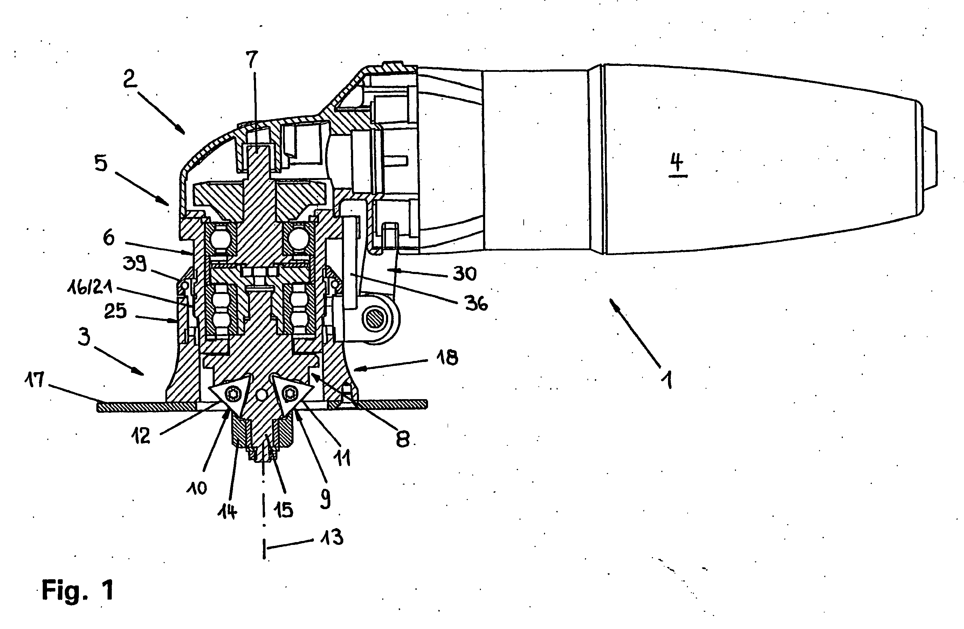

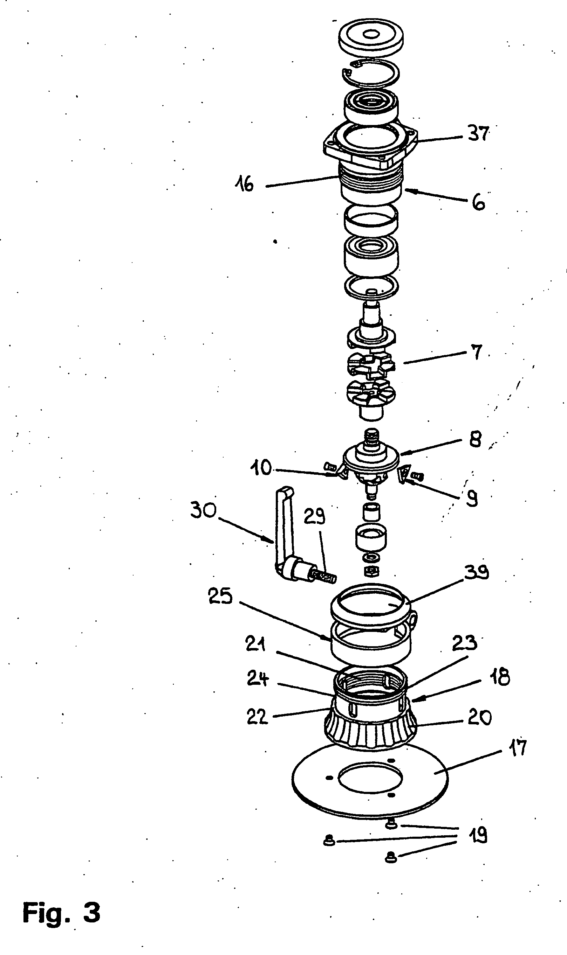

Gemäß den Figuren 1 bis 3 umfasst eine Handfräsmaschine in Form einer Kantenfräse 1 einen Maschinengrundkörper 2 sowie eine Maschinenauflage 3.

Der Maschinengrundkörper 2 wird gebildet von einem Motorgehäuse 4 mit einem darin untergebrachten elektrischen Antriebsmotor und von einer werkstückseitig an das Motorgehäuse 4 angeflanschten Werkzeugeinheit 5. Letztere umfasst ein Lagergehäuse 6, in dessen Innern eine mehrteilige Antriebswelle 7 für einen Werkzeughalter 8 umlaufend antreibbar gelagert ist. Der Werkzeughalter 8 trägt zwei Fräswerkzeuge in Form von Schneidplatten 9, 10. Schneiden 11, 12 der Schneidplatten 9, 10 sind dabei gegen eine Antriebsachse 13 der Fräswerkzeuge 9, 10 bzw. der Antriebswelle 7 geneigt ausgerichtet. Eine Stützrolle 14 sitzt um die Antriebsachse 13 drehbar auf einem abgestuften Lagerzapfen 15 auf, der an dem Werkzeughalter 8 auf der von dem Lagergehäuse 6 abliegenden Seite ausgebildet ist. Das Lagergehäuse 6 ist an seiner Außenseite mit einem Außengewinde 16 versehen.

Die Maschinenauflage 3 setzt sich zusammen aus einer ringartigen Auflageplatte 17 sowie einer damit verschraubten Haltebuchse 18. Die Fräswerkzeuge 9, 10 stehen gegenüber der Auflageplatte 17 werkstückseitig und in Richtung ihrer Antriebsachse 13 vor.

Der zu der Auflageplatte 17 hin gelegene axiale Abschnitt der Haltebuchse 18 ist zur Aufnahme von Befestigungsschrauben 19 verdickt und weist an seiner Außenseite eine Rändelung 20 auf. Der gegenüberliegende Endabschnitt der Haltebuchse 18 ist in deren Achsrichtung geschlitzt und mit einem Innengewinde 21 versehen. Eine im Übergangsbereich der beiden axialen Abschnitte der Haltebuchse 18 ausgebildete Schulter 22 bildet gemeinsam mit einem endseitigen Auβenbund 23 einen nutartigen Sitz 24.

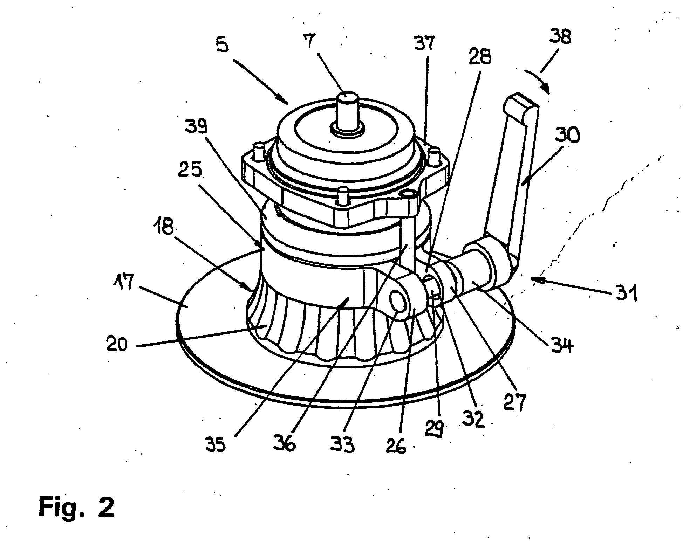

Der nutartige Sitz 24 dient zur definierten Lagerung eines offenen glattwandigen Spannrings 25, dessen Enden radial nach auβen abgewinkelte Spannflansche 26, 27 ausbilden. Diese liegen einander unter Ausbildung eines Zwischenraumes 28 gegenüber (Figur 2). Durchsetzt werden die Spannflansche 26, 27 von einem Gewindebolzen 29. Dieser ist ebenso wie ein Handbetätigungshebel 30 Teil einer Betätigungseinheit 31, die zum Spannen sowie zum Entspannen des Spannrings 25 dient. Zu diesem Zweck durchsetzt der Gewindebolzen 29 eine gewindefreie Bohrung 32 des Spannflansches 27 und greift mit seinem Außengewinde in ein Innengewinde einer Gewindebohrung 33 an dem Spannflansch 26 ein. An seiner dem Handbetätigungshebel 30 zugewandten Seite setzt der Gewindebolzen 29 an einem Hals 34 des Handbetätigungshebels 30 an, wobei der Durchmesser des Halses 34 den Durchmesser der gewindefreien Bohrung 32 an dem Spannflansch 27 übersteigt. Gemeinsam mit dem Spannring 25 bildet die Betätigungseinheit 31 eine Spannvorrichtung 35. Ein Verdrehsicherungsstift 36 ist in einen Flansch 37 des Lagergehäuses 6 eingepasst und ragt in den Zwischenraum 28 zwischen den Spannflanschen 26, 27. Ein Skalenring 39 mit einer nicht im Einzelnen dargestellten Skaleneinteilung sitzt oberhalb des Außenbundes 23 auf der Haltebuchse 18 auf.

Das Lagergehäuse 6 sowie die Haltebuchse 18 bilden Stellantriebsteile eines Gewinde-Stellantriebes, mittels dessen die Maschinenauflage 3 sowie die Fräswerkzeuge 9, 10 in Richtung einer mit der Antriebsachse 13 der Fräswerkzeuge 9, 10 zusammenfallenden Stellantriebsachse relativ zueinander einstellbar sind.

Zur Sicherung einer vorgenommenen gegenseitigen Einstellung der Fräswerkzeuge 9, 10 sowie der Maschinenauflage 3 dient die Spannvorrichtung 35 in dem in Figur 2 veranschaulichten Betriebszustand, bei welchem der Handbetätigungshebel 30 eine Spannposition einnimmt. Bei entsprechender Ausrichtung des Handbetätigungshebels 30 ist der Spannring 25 gespannt. Infolgedessen übt der Spannring 25 eine radial nach innen gerichtete Kraft auf den mit dem Innengewinde 21 versehenen axialen Endabschnitt der Haltebuchse 18 aus. Unter der Wirkung der von der Spannvorrichtung 35 ausgeübten Kraft wird der von dem Spannring 25 beaufschlagte Abschnitt der Haltebuchse 18 gegen das radial innerhalb der Haltebuchse 18 angeordnete Lagergehäuse 6 gedrückt. Es ergibt sich so zwischen dem Außengewinde 16 des Lagergehäuses 6 und dem Innengewinde 21 der Haltebuchse 18 ein Reibschluss, infolge dessen das Lagergehäuse 6 und'die Haltebuchse 18 gegen Verdrehen um die Antriebs- bzw. Stellantriebsachse 13 aneinander festgelegt sind.

Soll eine gegenseitige Einstellung der Fräswerkzeuge 9, 10 und der Maschinenauflage 3 verändert werden, so ist der Handbetätigungshebel 30 aus der Spannposition gemäß Figur 2 in Richtung eines Pfeils 38 zu verschwenken.Mit dieser Schwenkbewegung des Handbetätigungshebels 30 verbunden ist eine Entspannung des Spannrings 25 und somit ein Lösen der zuvor bestehenden Reibschlussverbindung zwischen dem Lagergehäuse 6 und der Haltebuchse 18. Nunmehr kann die Haltebuchse 18 und mit dieser die Auflageplatte 17 relativ zu dem Lagergehäuse 6 bzw. dem Maschinengrundkörper 2 und den daran gehaltenen Fräswerkzeugen 9, 10 gedreht werden. In Abhängigkeit von der Drehrichtung der Haltebuchse 18 bewegt sich die Auflageplatte 17 gegenüber den Fräswerkzeugen 9, 10 in den Abbildungen 1 bis 3 nach oben oder nach unten. Der werkstückseitige Überstand der Fräswerkzeuge 9, 10 gegenüber der Auflageplatte 17 wird somit entweder vergrößert oder verkleinert. Die eingestellte Größe des werkstückseitigen Überstandes der Fräswerkzeuge 9, 10 gegenüber der Auflageplatte 17 lässt sich an dem Skalenring 39 ablesen. Der Skalenring 39 dreht sich mit der Haltebuchse 18 mit.Seiner Skaleneinteilung zugeordnet ist ein mit dem Maschinengrundkörper 2 verbundener Zeiger.

Ein Mitdrehen des Spannrings 25 bzw. der gesamten Spannvorrichtung 35 mit der Haltebuchse 18 wird verhindert durch den Verdrehsicherungsstift 36. Folglich behält die Spannvorrichtung 35 bei gegenseitiger Verstellung der Fräswerkzeuge 9, 10 und der Maschinenauflage 3 ihre Lage gegenüber dem Maschinengrundkörper 2 unverändert bei. Dabei ist insbesondere sichergestellt, dass der Handbetätigungshebel 30 stets seitlich neben dem Maschinengrundkörper 2 angeordnet ist und folglich bei jeder Drehstellung der Haltebuchse 18 gegenüber dem Lagergehäuse 6 für den Maschinenbediener zugänglich und in seine vertikale Sicherungsstellung schwenkbar ist. Zur Sicherung der vorgenommenen Einstellung ist der Handbetätigungshebel 30 in Gegenrichtung des Pfeils 38 aus der horizontalen in eine vertikale Position zurück zu bewegen. Es ergeben sich dann erneut die Verhältnisse gemäß Figur 2.

Verändert hat sich die Größe des werkstückseitigen Überstandes der Fräswerkzeuge 9, 10 gegenüber der Auflageplatte 17. Damit ebenfalls verändert hat sich die Größe der mit den Fräswerkzeugen 9, 10 an einer Werkstückkante erstellbaren Fase. Diese Fase ist umso größer, je weiter die Fräswerkzeuge 9, 10 gegenüber der Auflageplatte 17 werkstückseitig vorstehen.

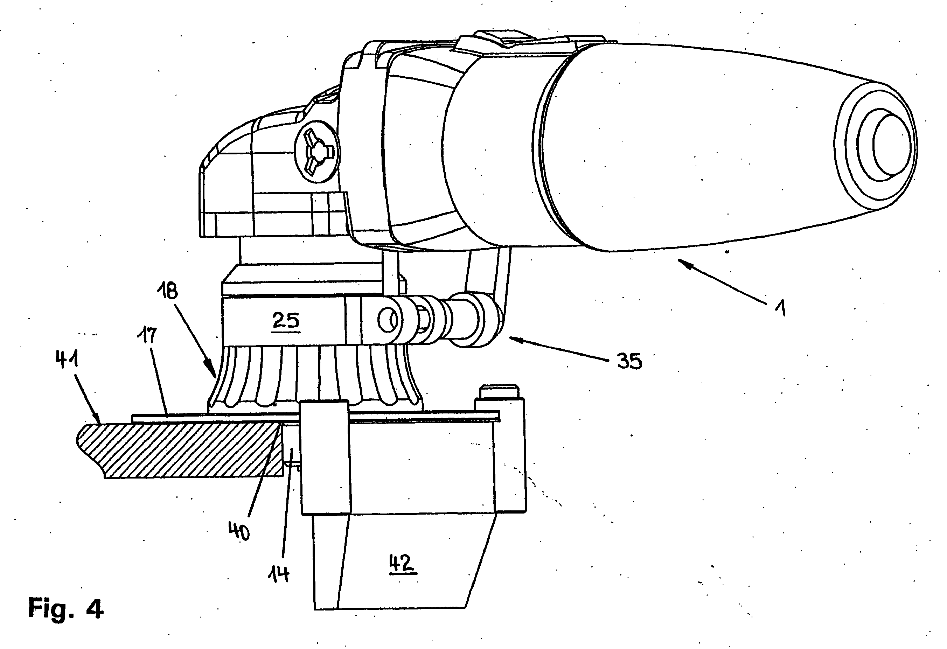

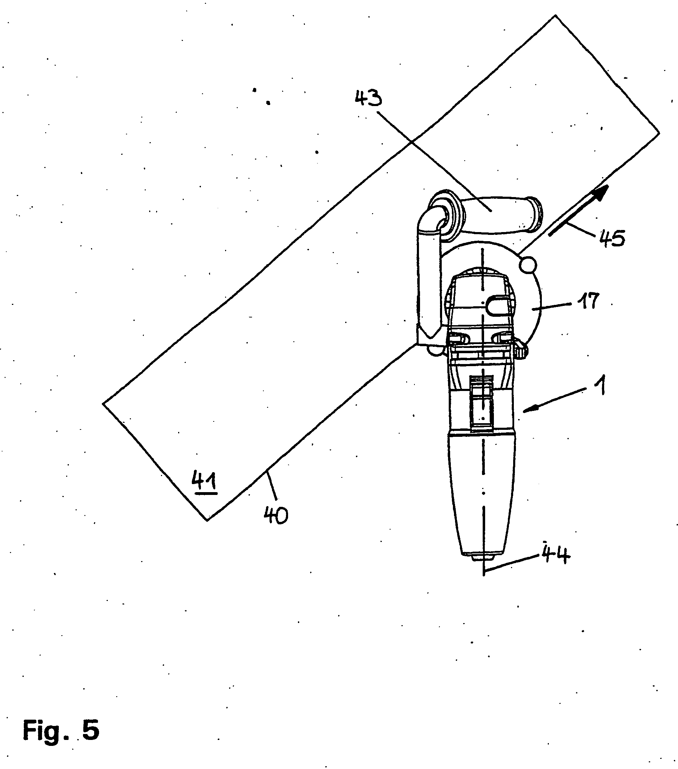

Nach Vornahme der Einstellung der Fräswerkzeuge 9, 10 gegenüber der Maschinenauflage 3 und nach Sicherung dieser Einstellung kann die Kantenfräse 1 in der aus den Figuren 4 und 5 ersichtlichen Art und Weise an einer Kante 40 eines Werkstücks 41, im gezeigten Beispielsfall eines Bleches, entlang bewegt werden. Auf der Oberseite des Werkstückes 41 ist die Kantenfräse 1 dabei mittels der Auflageplatte 17, an der Werkstückstirnseite mittels der Stützrolle 14 geführt. In Figur 4 ebenfalls gezeigt ist ein bedienerseitiger Spanauffangkasten 42, der zur Aufnahme des mittels der Fräswerkzeuge 9, 10 an dem Werkstück 41 abgetragenen Materials dient.

Ausweislich Figur 5 setzt an dem Maschinengrundkörper 2 ein Haltegriff 43 an. Der Haltegriff 43 ist dabei aus ergonomischen Gründen um eine Maschinenlängsachse 44 schräg gestellt. Ein Pfeil 45 veranschaulicht in Figur 5 die Bewegungsrichtung der Kantenfräse 1 entlang der Kante 40 des Werkstückes 41.

## Patentansprüche

1. Handfräsmaschine zum Bearbeiten von Werkstücken (41), insbesondere von Werkstückkanten (40), mit wenigstens einem umlaufend antreibbaren Fräswerkzeug (9, 10), mit einer Maschinenauflage (3), gegenüber welcher das Fräswerkzeug (9, 10) werkstückseitig vorsteht und über welche die Handfräsmaschine an dem zu bearbeitenden Werkstück. (41) abstützbar ist, sowie mit einem Gewinde-Stellantrieb, der einen dem Fräswerkzeug (9, 10) sowie einen der Maschinenauflage (3) zugeordneten und jeweils mit wenigstens einem Stellantriebselement (16, 21) versehenen Stellantriebsteil (6, 18) aufweist und mittels dessen das Fräswerkzeug (9, 10) und die Maschinenauflage (3) unter Relativ-Drehbewegung der beiderseitigen Stellantriebsteile (6; 18) um eine Stellantriebsachse (13) in Richtung des Überstandes des Fräswerkzeuges (9, 10) gegenüber der Maschinenauflage (3) relativ zueinander einstellbar sind, wobei die beiderseitigen Stellantriebsteile (6, 18) einander in radialer Richtung der Stellantriebsachse (13) gegenüberliegen und der radial innen liegende (innere) Stellantriebsteil (6) mittels einer lösbaren und in radialer Richtung der Stellantriebsachse (13) wirksamen Spannvorrichtung (35) mit dem radial außen liegenden (äußeren) Stellantriebsteil (18) in Verbindung bringbar ist und **dadurch** die beiderseitigen Stellantriebsteile (6, 18) gegen Relativ-Drehbewegung um die Stellautriebsachse (13) sicherbar sind, **dadurch gekennzeichnet, dass** die Spannvorrichtung (35) ein von dem inneren Stellantriebsteil (6) und dem äußeren Stellantriebsteil (18) konstruktiv getrenntes ringartiges Spannelement umfasst, das zumindest teilweise radial außerhalb des äußeren Stellantriebsteils (18) angeordnet und mittels einer Betätigungseinrichtung in Umfangsrichtung spannbar und entspannbar ist, wobei der äußere Stellantriebsteil (18) mittels des gespannten Spannelementes mit dem inneren Stellantriebsteil (6) in Verbindung bringbar ist.

2. Handfräsmaschine nach Anspruch 1, **dadurch gekennzeichnet, dass** das Spannelement als glattwandiger spannring (25), als Spannband od. dgl. ausgebildet ist.

3. Handfräsmaschine nach einem der vorhergehenden Ansprüche, **dadurch gekennzeichnet, dass** als Betätigungseinrichtung ein Handbetätigungshebel (30) vorgesehen ist.

4. Handfräsmaschine nach einem der vorhergehenden Ansprüche, **dadurch gekennzeichnet, dass** das Spannelement auf dem äußeren Stellantriebsteil (18) unmittelbar aufsitzt, wobei an dem äußeren Stellantriebsteil (18) wenigstens ein Sitz (24) zur Lagerung des Spannelementes vorgesehen ist.

5. Handfräsmaschine nach einem der vorhergehenden Ansprüche, **dadurch gekennzeichnet, dass** der dem Fräswerkzeug (9, 10) zugeordnete Stellantriebsteil (6) als innerer Stellantriebsteil (6) an einem Maschinengrundkörper (2) vorgesehen ist und der der Maschinenauflage (3) zugeordnete Stellantriebsteil (18) den äußeren Stellantriebsteil (18) bildet und dass brei gelöster Spannvorrichtung (35) das Spannelement und/oder die Betätigungseinrichtung in Richtung der Relativ-Drehbewegung der beiderseitigen Stellantriebsteile (6, 18) drehfest an dem Maschinengrundkörper (2) abgestützt ist und das Spannelement und der äußere Stellantriebsteil (18) in Richtung der genannten Relativ-Drehbewegung relativ zueinander drehbar sind.

6. Handfräsmaschine nach einem der vorhergehenden Ansprüche, **dadurch gekennzeichnet, dass** das Spannelement an radial vorragenden Spannflanschen (26, 27) spannbar ist, die einander in Umfangsrichtung des Spannelementes unter Ausbildung eines Zwischenraumes (28) gegenüberliegen und dass zur drehfesten Abstützung des Spannelementes und/oder der Betätigungseinrichtung an dem Maschinengrundkörper (2) eine in den Zwischenraum (28) zwischen den Spannflanschen (26, 27) eingreifende Verdrehsicherung vorgesehen ist.

7. Handfräsmaschine nach einem der vorhergehenden Ansprüche, **dadurch gekennzeichnet, dass** die Verdrehsicherung für das ringartige Spannelement als Verdrehsicherungsstift (36) ausgebindet ist.

## Claims

1. Hand-held milling machine for the machining of workpieces (41), in particular workpiece edges (40), having at least one rotatably drivable milling tool (9, 10), having a machine support (3), relative to which the milling tool (9, 10) protrudes on the workpiece side and by means of which the hand-held milling machine is supportable on the workpiece to be machined (41), and having a screw-type actuating drive, which comprises actuating drive sections (6, 18) associated with the milling tool (9, 10) and with the machine support (3) respectively, each actuating drive section being provided with at least one actuating drive element (16, 21), by means of which screw-type actuating drive the milling tool (9, 10) and the machine support (3) are adjustable relative to one another, in the direction of projection of the milling tool (9, 10) with respect to the machine support (3), by means of a relative rotary movement of the actuating drive sections (6, 18) around an actuating drive axis (13), wherein the actuating drive sections (6, 18) are positioned opposite one another in the radial direction of the actuating drive axis (13) and the radially inward (inner) actuating drive section (6) is arranged to be brought into connection by means of a releasable clamping device (35) effective in the radial direction of the actuating drive axis (13) with the radially outward (outer) actuating drive section (18), thereby enabling the actuating drive sections (6, 18) to be secured against relative rotary movement around the actuating drive axis (13), **characterised in that** the clamping device (35) comprises an annular clamping element structurally separate from the inner actuating drive section (6) and the outer actuating drive section (18), which clamping element is positioned at least partially radially outside the outer actuating drive section (18) and can be tightened and loosened in the circumferential direction by means of an operating device, wherein the outer actuating drive section (18) can be brought into connection with the inner actuating drive section (6) by means of the tightened clamping element.

2. Hand-held milling machine according to claim 1, **characterised in that** the clamping element is in the form of a smooth-walled clamping ring (25), a clamping band or the like.

3. Hand-held milling machine according to either of the preceding claims, **characterised in that** a manual operating lever (30) is provided as the operating device.

4. Hand-held milling machine according to any one of the preceding claims, **characterised in that** the clamping element is positioned directly on the outer actuating drive section (18), at least one seat (24) for receiving the clamping element being provided on the outer actuating drive section (18).

5. Hand-held milling machine according to any one of the preceding claims, **characterised in that** the actuating drive section (6) associated with the milling tool (9) is provided as the inner actuating drive section (6) on a machine base unit (2) and the actuating drive section (18) associated with the machine support (3) constitutes the outer actuating drive section (18), and **in that**, when the clamping device (35) is loose, the clamping element and/or the operating device are/is supported in a rotationally locked manner on the machine base unit (2) in the direction of relative rotation of the actuating drive sections (6, 18), and the clamping element and the outer actuating drive section (18) are rotatable relative to one another in the direction of the said relative rotation.

6. Hand-held milling machine according to any one of the preceding claims, **characterised in that** the clamping element is tightenable at radially protruding clamping flanges (26, 27), which are positioned opposite one another in the circumferential direction of the clamping element forming a gap (28) between them, and **in that** for rotationally locked support of the clamping element and/or the operating device on the machine base unit (2) an anti-rotation locking element engaging in the gap (28) between the clamping flanges (26, 27) is provided.

7. Hand-held milling machine according to any one of the preceding claims, **characterised in that** the anti-rotation locking element for the annular clamping element is in the form of and anti-rotation locking pin (36).

## Revendications

1. Fraiseuse à main pour usiner des pièces (41), notamment des arêtes de pièces (40), avec au moins un outil de fraisage (9, 10) qui peut être entraîné en rotation, avec un support de machine (3), par rapport auquel l'outil de fraisage (9, 10) dépasse du côté de la pièce et par l'intermédiaire duquel la fraiseuse à main peut être appuyée contre la pièce (41) à usiner, et avec un entraînement de réglage à filetage, entraînement qui présente une partie (6) d'entraînement de réglage associée à l'outil de fraisage (9, 10) et une partie (18) d'entraînement de réglage associée au support de machine (3), respectivement pourvues d'au moins un élément (16, 21) d'entraînement de réglage, et entraînement au moyen duquel l'outil de fraisage (9, 10) et le support de machine (3) peuvent, par un mouvement de rotation relative des parties (6, 18) d'entraînement de réglage de part et d'autre autour d'un axe (13) d'entraînement de réglage, être réglés l'un par rapport à l'autre dans la direction de la projection de l'outil de fraisage (9, 10) par rapport au support de machine (3), sachant que les parties (6, 18) d'entraînement de réglage de part et d'autre se font face dans la direction radiale de l'axe (13) d'entraînement de réglage et que la partie (6) d'entraînement de réglage située radialement à l'intérieur (partie intérieure) peut, au moyen d'un dispositif de serrage (35) actif dans la direction radiale de l'axe (13) d'entraînement de réglage et libérable, être amenée en contact avec la partie (18) d'entraînement de réglage située radialement à l'extérieur (partie extérieure), les parties (6, 18) d'entraînement de réglage de part et d'autre pouvant ainsi être bloquées pour empêcher leur rotation relative autour de l'axe (13) d'entraînement de réglage, **caractérisée en ce que** le dispositif de serrage (35) comprend un élément de serrage annulaire constructivement séparé de la partie intérieure (6) d'entraînement de réglage et de la partie extérieure (18) d'entraînement de réglage, élément qui est disposé au moins partiellement radialement à l'extérieur de la partie extérieure (18) d'entraînement de réglage et qui peut, au moyen d'un organe d'actionnement, être serré et desserré en direction circonférentielle, sachant que la partie extérieure (18) d'entraînement de réglage peut être amenée en contact avec la partie intérieure (6) d'entraînement de réglage en serrant l'élément de serrage.

2. Fraiseuse à main selon la revendication 1, **caractérisée en ce que** l'élément de serrage est réalisé sous forme de bague de serrage (25) à paroi lisse, de bande de serrage ou analogue.

3. Fraiseuse à main selon l'une des revendications précédentes, **caractérisée en ce qu'**un levier d'actionnement à main (30) est prévu comme organe d'actionnement.

4. Fraiseuse à main selon l'une des revendications précédentes, **caractérisée en ce que** l'élément de serrage est directement monté sur la partie extérieure (18) d'entraînement de réglage, sachant qu'au moins un siège (24) est prévu sur la partie extérieure (18) d'entraînement de réglage pour le montage de l'élément de serrage.

5. Fraiseuse à main selon l'une des revendications précédentes, **caractérisée en ce que** la partie (6) d'entraînement de réglage associée à l'outil de fraisage (9, 10) est prévue comme partie intérieure (6) d'entraînement de réglage sur un corps de base de machine (2), et la partie (18) d'entraînement de réglage associée au support de machine (3) forme la partie extérieure (18) d'entraînement de réglage, et **en ce que**, lorsque le dispositif de serrage (35) est libéré, l'élément de serrage et/ou l'organe d'actionnement s'appuie contre le corps de base de machine (2) en lui étant lié en rotation dans la direction du mouvement de rotation relative des parties (6, 18) d'entraînement de réglage de part et d'autre, et l'élément de serrage et la partie extérieure (18) d'entraînement de réglage sont rotatifs l'un par rapport à l'autre dans la direction dudit mouvement de rotation relative.

6. Fraiseuse à main selon l'une des revendications précédentes, **caractérisée en ce que** l'élément de serrage peut être serré par des brides de serrage radialement dépassantes (26, 27) qui se font face dans la direction circonférentielle de l'élément de serrage en formant un espace intermédiaire (28), et **en ce que**, pour l'appui en solidarité de rotation de l'élément de serrage et/ou de l'organe d'actionnement contre le corps de base de machine (2), il est prévu un moyen de blocage en rotation s'engageant dans l'espace intermédiaire (28) entre les brides de serrage (26, 27).

7. Fraiseuse à main selon l'une des revendications précédentes, **caractérisée en ce que** le moyen de blocage en rotation pour l'élément de serrage annulaire est réalisé sous forme de broche (36) de blocage en rotation.
